# EUROPEAN PATENT APPLICATION

(11) **EP 4 454 866 A1**
(43) Date of publication of application: **30.10.2024**
(21) Application number: 24164006.9
(22) Date of filing: 15.03.2024
(51) Int. Cl.: B29C 65/36

(54) **COMPOSITE MANUFACTURING METHOD AND APPARATUS**

(30) Priority: 17.03.2023 GB 202303941
(71) Applicant: Spirit AeroSystems, Inc., Wichita, KS 67278 (US)
(72) Inventor: DANDO, Kerrick, 67210 Wichita (US)
(74) Representative: HGF

(57) **Abstract**

Disclosed are methods and apparatus for use in composite manufacturing, to facilitate cooling of composite parts. The methods and apparatus disclosed are of particular use in thermal joining methods. A magnetic field is applied to a magnetocaloric material to induce a magnetic phase change. Heat is exhausting heat from the magnetocaloric material while the magnetic field is applied and, when the magnetic field is disapplied, heat is flowed from the composite assembly to the magnetocaloric material, reversing the magnetic phase change and cooling the composite part. An induction coil for inductively heating the composite part may be used to apply the magnetic field.

## Description

### Field of the Invention

The invention relates to the field of composite manufacture, in particular fusion joining of composite articles.

### Background of the Invention

Composite materials are widely used in a number of industries, such as aerospace, automotive, civil engineering and sports goods, due to their high strength-to-weight ratio.

Composite materials such as carbon fibre composite and fibreglass composite are formed from reinforcement material (typically fibrous) impregnated with a matrix material. Typically, multiple plies or layers of a fabric reinforcement material are impregnated with and reinforce a polymer matrix. For example, a carbon fibre fabric is formed by carbonizing a synthetic polymer fabric material and may be provided in the form of woven fabric, non-woven fabric or may consist of unidirectional fibres. Similar composites may be formed using alternative fibrous materials, such as glasses or synthetic polymers (e.g. aramid), or combinations of such materials. Composites may also be formed by mixing or dispersing relatively short strands or fibrils of a fibre material, such as carbon fibre or a glass fibre, within a polymer matrix to form a mouldable or injectable composite material.

For the construction of large or complex structures or articles, for aerospace, marine, automotive applications and the like, cooling of composite structures or articles can be a time consuming step of manufacture, since composite materials are typically of relatively poor thermal conductivity.

Composites may be heated to cure or consolidate a matrix material, or to join composite articles together.

Whilst mechanical fixings and adhesives have been used to join composite articles together, these can be time consuming and expensive to implement. These methods may also be associated with further disadvantages. For example, bonding between the polymeric matrix material and an adhesive may be weak, whereas mechanical fixings concentrate stress and may be prone to corrosion.

Fusion joining of composite articles by ultrasonic, induction or resistance welding addresses a number of these drawbacks. By introducing heat energy into a thermoplastic polymer disposed between, of forming part of the composite articles, the thermoplastic polymer can be melted and subsequently cooled to join the two parts, typically whilst applying a pressure between the parts. These methods are of particular utility for thermoplastics composites, where the polymer matrix material of the composite parts themselves can be fused in this way.

During ultrasonic welding, heat is introduced to the faying surfaces (i.e. the surfaces to be joined) via mechanical vibrations between parts that are introduced via a sonotrode, and although rapid is normally applicable to welding relatively small parts. Resistive welding uses electrical current applied to a conductor positioned between the faying surfaces, or exceptionally to a conductive matrix material, to generate joule heating.

During induction welding, an induction coil is positioned close to the faying surfaces of the composite parts. A magnetic field is then applied by passing current through the induction coil. In many cases, a magnetic susceptor (typically a metallic mesh) is positioned between the faying surfaces, and eddy currents are induced in the magnetic susceptor causing the susceptor to heat up and melt the matrix material in the region of the faying surfaces. Alternatively (or in addition) where the reinforcement includes an electrically conductive material, such as carbon fibre, the eddy currents can occur within the reinforcement material itself. For example, the susceptor may be a metal mesh, a metallic foil or layer (e.g. thin layer) of magnetic particles. The susceptor may be used to help provide uniform heat distribution at the joint interface (or weldline).

Induction welding also benefits from minimal warm-up times, which make it fast and efficient process. Although the heating cycles in induction welding are fast (20-30 seconds) due to the high efficiency of induction heating, with current technology the rate limiting step for the process is the cooling cycle. Pressure must be applied between the faying surfaces until parts are below the matrix melt temperature to prevent defects and voids.

In addition, the matrix materials commonly used will typically have relatively low thermal conductivity, such that parts with variable thickness will cool at different rates along a weld line, leading to variations in weld quality due to variations in crystallinity etc.

Consistency of fusion joining can also be challenging, due to temperature build up in the parts, the tooling or the effector apparatus between successive welds, or if apparatus progresses along a join or weld line.

While some of these issues can be addressed to some extent by cooling of the tooling surface or effector, cooling of the composite part itself after welding remains the rate limiting step; and the effectiveness of cooling fluids can be limited due to the close proximity of the effector to the part, particularly with induction welding.

There remains a need for improvements in composite manufacture to address one or more of the foregoing issues.

### Summary of the Invention

The inventors have discovered that the magnetocaloric effect can be used for heat management in fusion joining apparatuses and methods.

According to a first aspect of the invention there is provided a method of cooling a composite part, comprising:
providing a magnetocaloric material;
applying a magnetic field to the magnetocaloric material to induce a magnetic phase change of the magnetocaloric material;
exhausting heat from the magnetocaloric material while the magnetic field is applied; disapplying the magnetic field from the magnetocaloric material; and flowing heat from the composite part to the magnetocaloric material, to at least partially reverse the magnetic phase change and to cool the composite article or assembly.

The term "composite part" includes a structure comprising or formed from a composite material, the composite material comprising a matrix material and a reinforcement material. The term "composite part" is not limited to any particular matrix material or materials, and includes parts comprising cured, or partially cured matrix material, thermoplastic matrix material or any combinations thereof. The term "composite part" encompasses articles comprising any reinforcement material, including but not limited to carbon fibre, glass fibre, polymer fibre such as aramid fibre or Kevlar (Kevlar is a trade mark), metallic filament, ceramic fibre, plant fibre or mixtures thereof. The reinforcement material can be in any suitable form, including woven or non-woven fabric, non-crimp fabric, unidirectional fabric, chopped fibres or the like. Reinforcement material may be laid up in multiple plies. A composite part may comprise additional elements, such as hard tooling, fixings or the like. A composite part referred to herein may be a composite article, formed (by any suitable composite manufacturing steps) as a single piece. A composite part may be a composite assembly, including more than one composite article having been joined together.

The magnetocaloric effect is a phenomenon whereby a phase change in a magnetocaloric material between (typically) a paramagnetic state and a ferromagnetic state is induced by an applied magnetic field B. The inventors have surprisingly found that a magnetocaloric material can function as an effective heat sink, to rapidly remove heat from the composite assembly. Furthermore, the distribution of the magnetocaloric material can be tailored to selectively remove more heat from different regions of the composite article(s) or assembly, to accommodate different part thicknesses and geometries and the like.

Applying the magnetic field to the magnetocaloric material may increase the temperature of the magnetocaloric material, from a first temperature to a higher second temperature.

Exhausting heat from the magnetocaloric material may maintain the magnetocaloric material at or near the first temperature or to return the magnetocaloric material from the second temperature to the at or near the first temperature. The first temperature may be ambient temperature. At or near the first temperature, means within around 5°C (around 9°F), within around 4°C (around 7°F), or within around 3°C (around 5°F).

The steps of applying the magnetic field and exhausting heat may be conducted sequentially, or simultaneously. That is to say, heat may be exhausted during a part or all of the step of applying the magnetic field, such that heat is exhausted during some or all of the duration of the magnetic phase change and typically also for a period of time after the magnetic phase change has occurred.

The steps of applying the magnetic field and exhausting heat from the magnetocaloric material is a process that is preferably overall isothermal. That is to say, the temperature of the magnetocaloric material is preferably maintained at or returned to as close to the first temperature as possible.

Disapplying the magnetic field from the magnetocaloric material may decrease the temperature of the magnetocaloric material, from at or near the first temperature to a third temperature below the first temperature.

Flowing heat from the composite part to the magnetocaloric material may maintain the magnetocaloric material at or near the first temperature or to return the magnetocaloric material from a temperature below the first temperature to at or near the first temperature.

Flowing heat from the composite part to the magnetocaloric material may comprise placing the magnetocaloric material into thermal contact (directly, or indirectly, via one or more thermally conductive bodies or layers) with the composite part. As disclosed herein, an operating face of an end effector may be placed on or against a composite part, for example.

The steps of disapplying the magnetic field and flowing heat from the composite part may be conducted sequentially, or simultaneously. That is to say, the magnetic field may be disapplied and then flow of heat initiated, such that heat flows from the composite part to the magnetocaloric material after the magnetic phase change has reversed or during some or all of the duration of the magnetic phase change and typically also for a period of time after the magnetic phase change has occurred.

The steps of disapplying the magnetic field and flowing heat, from the composite part, to the magnetocaloric material is a process that is preferably overall isothermal, or as close to isothermal as possible. That is to say, the temperature of the magnetocaloric material is preferably maintained at or returned to as close to the first temperature as possible.

It will be understood that in practice, during at least a part of one or both of the steps of applying the magnetic field and disapplying the magnetic field, both temperature change of the magnetocaloric material and heat exchange between the magnetocaloric material and the surroundings may occur.

Although not being bound by theory, in a perfectly adiabatic system, where total entropy must remain constant, applying a magnetic field to a magnetocaloric material causes a magnetic phase change that aligns the magnetic domains within the magnetocaloric material. The reduction in magnetic entropy is balanced by an increase in lattice entropy and thus temperature. Subsequently removing or disapplying the magnetic field reverses the magnetic phase change and the temperature of the magnetocaloric material falls. The so called magnetocaloric effect provides for use of magnetocaloric materials in a heat pump cycle, by exhausting heat while the magnetic field is applied and subsequently flowing heat from a heat source, when the magnetic field has been disapplied.

The method may be a method of thermally joining a first faying surface of a first composite article to a second faying surface of a second composite article, wherein one or both of the faying surfaces comprises a meltable or softenable material; the method comprising:
contacting the first and second faying surfaces to define a contact area therebetween;
heating the faying surfaces to raise the temperature of the meltable or softenable material and weld together at least a portion of the faying surfaces to form a composite assembly;
providing a magnetocaloric material;
applying a magnetic field to the magnetocaloric material to induce a magnetic phase change of the magnetocaloric material;
exhausting heat from the magnetocaloric material while the magnetic field is applied;
disapplying the magnetic field from the magnetocaloric material; and flowing heat from the composite assembly to the magnetocaloric material, to at least partially reverse the magnetic phase change and to cool the composite assembly.

By "faying surface" we refer to the surfaces of a composite article to be joined to another composite article. A faying surface may be a region of a larger surface of a composite article, such a region of an aerodynamic panel or fuselage. A faying surface may be a distinct surface of a composite article, such as a face extending at an angle or protruding from other parts of a composite article. For example, a stringer or supporting rib or beam may comprise one or more such faying surfaces. Faying surfaces may be generally planar or elongate (of high aspect ratio), but may be of any suitable shape or configuration. The faying surface of an article to be joined may be prepared in such a way as to enhance the strength of the join. For example, a faying surface may be roughened or provided with a non-infused region of reinforcement material, into which a meltable material may infuse during welding. The methods disclosed herein may include such surface preparation.

The meltable or softenable material may comprise a thermoplastic material or a vitrimer material. The thermoplastic material may be the matrix material of the first and/or second composite article.

Reference herein to "thermoplastic" polymer or material relates to a polymer or material that softens and melts above a certain temperature. A thermoplastic material or polymer may flow or otherwise diffuse into or conform to the surface of an adjacent article, when heated. The thermoplastic polymer or material hardens when cooled and may be re-heated and cooled multiple times.

Contacting the faying surfaces may comprise placing the first composite article on or against the second composite article. Contacting may comprising applying a force between the first and second faying surface, to urge the faying surfaces together. The force between the faying surfaces may be applied during at least the step of heating to form a composite assembly, and typically also during the step of cooling the composite assembly (and any intermediate or simultaneous steps). The force between the faying surfaces may be removed once the composite assembly has cooled, for example to below a melting point of the thermoplastic material.

Heating the faying surfaces may be conducted by any suitable method of fusion joining known to one skilled in the art. The faying surfaces may be ultrasonically heated by use of an ultrasound sonotrode. The faying surfaces may be resistively heated, by applying a current through a conductive element positioned between the faying surfaces or forming part of one said composite article, or to a conductive reinforcement material of, such as carbon fibre.

In preferred embodiments, heating the faying surface comprises inductively heating the faying surfaces. The faying surfaces may be inductively heated by applying an alternating current to an inductive element, such as a Litz coil or the like, and inductively heating the faying surfaces using the inductive element. As known to one skilled in the art, an inductive element can generate a magnetic field and be used to induce eddy currents in a conductive material, thereby generating joule heating in the conductive material. Thus, a conductive matrix material or a susceptor may be inductively heated in this way, as disclosed herein.

The method may comprise using the inductive element to both heat the faying surfaces and to apply the magnetic field to the magnetocaloric material.

The method may comprise applying a susceptor between the faying surfaces, wherein the susceptor is inductively heated. The susceptor may alternatively form part of one of the composite articles and for example may be embedded in or proximate the faying surface of a said composite article.

The susceptor may comprise a metal mesh, a metallic foil or layer (e.g. thin layer) of magnetic particles.

Heating the faying surfaces may comprise positioning a welding end effector (comprising an ultrasound sonotrode, electrodes for delivering current or, more typically, an inductive element (for inductively heating) proximate the faying surfaces. The method may comprise moving the welding end effector along or across the faying surfaces to progressively weld along a weld line or area, or may comprise spot welding by moving the welding end effector proximate to the faying surfaces and then heating. The welding end effector may be moved continuously or in stages.

By "end effector" we refer to apparatus adapted to be positioned proximate to the faying surfaces to perform an operation; and moved away from the composite assembly to allow for subsequent steps of manufacture. An end effector may for example form part of a remotely controllable apparatus, such as a self-propelled apparatus, or a robotic apparatus or the like.

The method may accordingly comprise various steps of moving the end effector towards and away from a composite assembly.

At least some of the magnetocaloric material may be provided in a cooling end effector. The method may comprise moving the cooling end effector along or across the faying surfaces to progressively cool a previously heated region of the composite part or assembly. The cooling end effector may be moved continuously or in stages.

The method may comprise applying a magnetic field of any required strength to the magnetocaloric material..

The method may comprise applying a constant magnetic field (the strength of which may build up and thus initially vary, before becoming constant). Applying a constant magnetic field may for example comprise flowing a DC current through an electrical conductor.

The method may comprise applying a variable magnetic field (by which we refer to a magnetic field which varies with a predetermined frequency). Applying a variable magnetic field may for example comprise flowing an AC current through an electrical conductor.

Applying a magnetic field to the magnetocaloric material may comprise energising an electromagnet (i.e. flowing an electrical current therethrough).

The cooling end effector may comprise a magnet, such as an electromagnet, for applying the magnetic field to the magnetocaloric material therein.

Conveniently, the welding end effector may comprise at least some of the magnetocaloric material. The welding end effector may comprise an electromagnet, and the method may comprise energising the electromagnet to apply the magnetic field to the magnetocaloric material.

In embodiments wherein the welding end effector comprises an inductive element, the magnetocaloric material may be located proximal to the inductive element. Applying the magnetic field may comprise passing current through the inductive element to thereby effect both heating of the faying surfaces and applying the magnetic field to the magnetocaloric material.

Alternatively, or in addition, at least some of the magnetocaloric material may be provided proximate to a work surface supporting the composite part. A magnetic field may be applied to magnetocaloric material provided in a work surface by energising an electromagnet (separate from an end effector as disclosed herein) or may be applied using an end effector as disclosed herein.

Other means for applying a magnetic field may also be used, such as moving a magnet (either permanent or an electromagnet) into the proximity of at least some of the magnetocaloric material.

Exhausting heat from the magnetocaloric material while the magnetic field is applied may comprise cooling the magnetocaloric material or allowing it to cool. Cooling may be convective or more preferably conductive.

The magnetocaloric material may be positioned in thermal contact with a heat sink, for example.

The method may comprise actively cooling at least some of the magnetocaloric material. By "active cooling" we refer to the circulation of fluid to remove heat from an apparatus or composite article or assembly.

Heat exchange fluid, typically water, may be circulated through cooling channels proximal to the magnetocaloric material.

Cooling channels may for example be provided embedded in a work station having a work surface to support a said composite part, or otherwise in thermal contact with a work surface of a work station. The work station may be a station in a composite production process. The work station may be a mold and the work surface may be a tooling surface, on which a composite part is formed, for example.

The term "tooling surface" refers to a surface defining an external shape or profile to a composite article made on the tooling surface. As known to one skilled in the art, composite article can be made by laying up multiple plies of a reinforcement material on the tooling surface and then consolidating and/or infusing the so-called composite layup with a matrix material. Composite layups (also known as pre-forms) may alternatively be laid up and then moved to the tooling surface of a mold and conformed thereto and/or infused.

Reference herein to bodies being in "thermal contact" includes direct contact between the two bodies, or thermal contact via a thermally conductive material such as a metallic material.

Magnetocaloric material may be located between the work surface and the cooling channels, whereby the heat exchange fluid in the cooling channels maintains the temperature of the magnetocaloric material and the tooling or work surface as close to the first temperature as possible in use.

A said welding or cooling end effector may be provided with cooling channels, in thermal contact with magnetocaloric material. Fluid flowing in the cooling channels may similarly maintain the magnetocaloric material as close to the first temperature as possible, in use.

For example it is known for welding end effector apparatus to be actively cooled, to maintain consistent electronic performance. Induction welding end effectors in particular may be actively cooled to maintain a consistent performance and mitigate against rising temperatures due to joule heating of the inductive element or conduction from the composite articles heated using the inductive element. An induction coil may for example be wound around a cooling channel or channels through which heat exchange fluid is flowed.

Accordingly, in some embodiments, an actively cooled inductive element also actively cools magnetocaloric material.

The method may accordingly comprise actively cooling at least some of the magnetocaloric material and a work surface, by circulating a heat exchange fluid through cooling channels in a work station. Alternatively, or in addition, the method may comprise actively cooling at least some of the magnetocaloric material and electronic components of a welding end effector (in some embodiments an inductive element thereof) by circulating a heat exchange fluid through cooling channels in the welding end effector.

Disapplying the magnetic field may comprise de-energising an electromagnet, moving a magnet away from magnetocaloric material or shutting off current through an inductive element.

As disclosed above, the magnetic phase change may be partially or completely reversed by one or both of the steps of disapplying the magnetic field and flowing heat from the composite assembly to the magnetocaloric material.

The method may comprise disapplying the magnetic field when the temperature of the meltable or softenable material has fallen below a threshold temperature. The threshold temperature may be the melting point of a thermoplastic material, for example.

The method may comprise selectively positioning the magnetocaloric material to selectively increase heat flow from one or more first regions of the composite part or assembly to the magnetocaloric material in relation to heat flow from one or more second regions of the composite part or assembly to the magnetocaloric material. Heat flow may be selectively increased by locating a greater volume, a greater width and/or a greater thickness of magnetocaloric material proximate the one or more first regions, in relation to the volume, width and/or thickness of magnetocaloric material proximate the one or more second regions.

Composite materials are typically of relatively low thermal conductivity, such that different material thicknesses or geometries across a composite part or assembly can result in variations of cooling rates after thermal joining. The magnetocaloric material can be selectively positioned in relation to the regions that would otherwise take longer to cool.

The method may comprise making the or each composite part, article or assembly. The method may comprise laying up plies of a reinforcement material on a said tooling surface (of a mold). The method may comprise impregnating the reinforcement material with a matrix material, such as a thermoplastic matrix material. Autoclave and out of autoclave methods, as known in the art, may be used.

The composite part or each article may be made by injection moulding, of a matrix material impregnated with chopped fibres of fibrils into a mould.

According to a second aspect of the invention there is provided an apparatus for use in cooling a composite part; the apparatus comprising an end effector comprising:
a magnetocaloric body comprising a magnetocaloric material;
an arrangement for applying and disapplying a magnetic field to the magnetocaloric material; and
a cooling arrangement for exhausting heat from the magnetocaloric material.

In use, a magnetic field may be applied to the magnetocaloric material and heat exhausted from the magnetocaloric material while the magnetic field is applied. When the magnetic field is then disapplied, the magnetocaloric material can be used to cool a composite part.

The magnetocaloric body may have a shape or configuration adapted to extend across a region of a composite assembly. For example, for apparatus to be used in cooling a generally planar region of a composite part, the magnetocaloric material may be distributed to form a generally planar magnetocaloric body, or a magnetocaloric body having a planar face to be oriented towards the composite part in use. Where the apparatus is adapted to cool a composite part having a particular geometry, the end effector may comprise a magnetocaloric body having a face or faces that generally correspond to the particular geometry. An end effector may for example be adapted to fit within a closed geometry structure such as within a stringer, and the magnetocaloric body may be correspondingly shaped.

In some embodiments, the end effector may be adapted to facilitate an increased heat flow from one or more first regions of a composite part to the magnetocaloric material, in relation to heat flow from one or more second regions of the composite part to the magnetocaloric material. Accordingly, the end effector may have an operating face for positioning against or proximal to a composite part in use, wherein magnetocaloric body may comprise a greater volume, a greater width and/or a greater thickness of magnetocaloric material proximate one or more first regions of the operating face, in relation to the volume, width and/or thickness of magnetocaloric material proximate the one or more second regions of the operating face.

The cooling arrangement may comprise cooling formations, such as cooling fins or channels in thermal contact with or through the magnetocaloric body.

The cooling arrangement may comprise an active cooling arrangement, such as one or more cooling channels or conduits forming part of a heat exchange circuit. The cooling channels and heat exchange circuit may comprise a heat exchange fluid. The apparatus may accordingly comprise means to circulate the heat exchange fluid, such as a pump, and additional apparatus associated therewith, such as a heat exchanger.

The cooling channels may be in thermal contact with, embedded in or extend through the magnetocaloric body.

The end effector may be adapted to be robotically controlled. For example, the end effector may be connected or connectable to a robotic apparatus such as a robotic arm, whereby the end effector is movable in relation to a composite part.

The apparatus may comprise a robotic apparatus connected to the end effector, for robotically controlling the location of the end effector in relation to a composite part, in use.

In some embodiments, the end effector forms part of a self-propelled apparatus for thermally joining a closed geometry structure, as generally described in EP4043188 to Spirit AeroSystems, Inc. and Stitching TPRC; the contents of which are incorporated herein by reference.

The apparatus may be configured to thermally bond a first composite article to a second composite article. The apparatus may comprise a welding end effector, such as an ultrasonic sonotrode, an end effector with electrical terminals to deliver an electrical current, as generally described in EP4043188, or an end effector adapted to inductively weld, comprising an inductive element.

The end effector (comprising said magnetocaloric body, arrangement for applying and disapplying a magnetic field and cooling arrangement) may be a welding end effector.

The welding end effector may comprise an inductive element, in addition to said magnetocaloric body, arrangement for applying and disapplying a magnetic field and cooling arrangement.

The inductive element may have any suitable configuration, and may be an induction coil, such as having a circular or square cross-section. The induction element may comprise any suitable material, such as a highly conductive metallic material (e.g. copper). The induction element may comprise a magnetic concentrating material, such as Ferrotron 559 H.

The induction element may have any suitable dimensions. For example, the induction coil may have a cross-section width between 1 and 100 mm, or between 3 and 60 mm, for example 5 mm, or 60 mm.

The inductive element may comprise an induction coil, such as a Litz coil.

The inductive element may be configured (for example by virtue of its position in relation to the magnetocaloric body) to both apply and disapply the magnetic field and to inductively heat a composite part. Advantageously, therefore, additional apparatus to apply the magnetic field is not required in such embodiments.

The inductive element may be actively cooled, using one or more cooling channels or conduits in thermal contact therewith, for cooling or regulating the temperature of the inductive element. The cooling channels and heat exchange circuit may comprise a heat exchange fluid.

The apparatus may accordingly comprise means to circulate the heat exchange fluid through the cooling channels or conduits for cooling or regulating the temperature of the inductive element, such as a pump, and additional apparatus associated therewith, such as a heat exchanger.

In some embodiments, the inductive element comprises a coil wrapped around one or more said cooling channels or conduits.

The one or more cooling channels or conduits may be configured to cool or regulate the temperature of both the inductive element and the magnetocaloric body, and for example may be in thermal contact with both.

The end effector may have an operating face, which in use is positioned close to or against a composite part. The operating face may comprise the magnetocaloric body, or more typically be adjacent to the magnetocaloric body. The end effector may comprise a housing, and the magnetocaloric body may be within and against or in thermal contact with the housing, for example.

In embodiments wherein the end effector is a welding end effector, and comprising an inductive element, magnetocaloric material may be positioned between the inductive element and the operating face. The magnetocaloric body may be positioned between the inductive element and the operating face.

The apparatus may comprise a work station having a work surface, for supporting the composite part. The work station may be a station in a composite production process. The work station may be a mold and the work surface may be a tooling surface, on which a composite article is formed.

The work station may comprise a cooling arrangement, for cooling or regulating the temperature of the work surface. The work station cooling arrangement may comprise cooling formations, such as cooling fins or channels in thermal contact with the work surface.

The work station cooling arrangement may comprise an active cooling arrangement, such as one or more cooling channels or conduits forming part of a heat exchange circuit. The cooling channels and heat exchange circuit may comprise a heat exchange fluid. The apparatus may accordingly comprise means to circulate the heat exchange fluid through the workstation cooling channels, such as a pump, and additional apparatus associated therewith, such as a heat exchanger. Such apparatus may, in some embodiments, be shared with the active cooling arrangement of the end effector, where present.

The work station may comprise one or more work station magnetocaloric bodies, the or each work station magnetocaloric body being positioned in thermal contact with the work surface. The or each work station magnetocaloric body may be embedded into the work surface, or may be positioned against an opposite surface of a sheet forming the work surface, for example. The cooling arrangement may be in thermal contact with the or each work station magnetocaloric body, to cool or regulate the temperature of the or each work station magnetocaloric body.

The work station may be adapted to facilitate an increased heat flow from one or more first regions of a composite part supported on the work surface, to the work station magnetocaloric material, in relation to heat flow from one or more second regions of the composite part to the work station magnetocaloric material. Accordingly, the or each work station magnetocaloric body may comprise a greater volume, a greater width and/or a greater thickness of magnetocaloric material proximate one or more first regions of the work surface, in relation to the volume, width and/or thickness of magnetocaloric material proximate the one or more second regions of the work surface.

The work station may comprise an electromagnet, positioned and configured to apply an disapply the magnetic field to the work station magnetocaloric material. The work station may comprise more than one electromagnet. Where more than one work station magnetocaloric body is present, the work station may comprise an electromagnet corresponding to each work station magnetocaloric body.

According to a third aspect of the invention there is provided an apparatus for use in cooling a composite part; the apparatus comprising:
a work station having a work surface for supporting a composite part:
at least one magnetocaloric body comprising a magnetocaloric material, in thermal contact with at least a region of the work surface;
an arrangement for applying and disapplying a magnetic field to the magnetocaloric material; and
a cooling arrangement for exhausting heat from the magnetocaloric material.

The work station may be a station in a composite production process. The work station may be a mold and the work surface may be a tooling surface, on which a composite article is formed.

The work station may comprise a cooling arrangement, for cooling or regulating the temperature of the or each magnetocaloric body and typically also the work surface. The work station cooling arrangement may comprise cooling formations, such as cooling fins or channels in thermal contact with the or each magnetocaloric body and/or work surface.

The work station cooling arrangement may comprise an active cooling arrangement, such as one or more cooling channels or conduits forming part of a heat exchange circuit. The cooling channels and heat exchange circuit may comprise a heat exchange fluid. The apparatus may accordingly comprise means to circulate the heat exchange fluid through the workstation cooling channels, such as a pump, and additional apparatus associated therewith, such as a heat exchanger. Such apparatus may, in some embodiments, be shared with the active cooling arrangement of the end effector, where present.

The or each magnetocaloric body may be embedded into the work surface, or may be positioned against an opposite surface of a sheet forming the work surface.

The work station may be adapted to facilitate an increased heat flow from one or more first regions of a composite part supported on the work surface, to the magnetocaloric material, in relation to heat flow from one or more second regions of the composite part to the magnetocaloric material. Accordingly, the or each magnetocaloric body may comprise a greater volume, a greater width and/or a greater thickness of magnetocaloric material proximate one or more first regions of the work surface, in relation to the volume, width and/or thickness of magnetocaloric material proximate the one or more second regions of the work surface.

The work station may comprise an electromagnet, positioned and configured to apply an disapply the magnetic field to the magnetocaloric material. The work station may comprise more than one electromagnet. Where more than one magnetocaloric body is present, the work station may comprise an electromagnet corresponding to each magnetocaloric body.

Alternatively, or additionally, the work station may be adapted for use with an end effector, wherein the end effector comprises an arrangement for applying and disapplying a magnetic field to the magnetocaloric material.

In some embodiments, the work station does not comprise an arrangement for applying and disapplying a magnetic field to the magnetocaloric material, in use the magnetic field being applied and disapplied using the end effector.

The apparatus may comprise an end effector. The end effector may be adapted for cooling a composite article or assembly. Alternatively, or in addition, the end effector may be a welding end effector, adapted to fusion bond a first composite article to a second composite article.

As disclosed herein in relation to the second aspect, the end effector may comprise a magnetocaloric body comprising a magnetocaloric material;
an arrangement for applying and disapplying a magnetic field to the magnetocaloric material; and
a cooling arrangement for exhausting heat from the magnetocaloric material.

The end effector may be adapted to facilitate an increased heat flow from one or more first regions of a composite part to the magnetocaloric material, in relation to heat flow from one or more second regions of the composite part to the magnetocaloric material. Accordingly, the end effector magnetocaloric body may comprise a greater volume, a greater width and/or a greater thickness of magnetocaloric material proximate one or more first regions of the operating face, in relation to the volume, width and/or thickness of magnetocaloric material proximate the one or more second regions of the operating face.

The end effector cooling arrangement may comprise cooling formations, such as cooling fins or channels in thermal contact with or through the end effector magnetocaloric body.

The end effector cooling arrangement may comprise an active cooling arrangement, such as one or more cooling channels or conduits forming part of a heat exchange circuit. The cooling channels and heat exchange circuit may comprise a heat exchange fluid. The apparatus may accordingly comprise means to circulate the heat exchange fluid, such as a pump, and additional apparatus associated therewith, such as a heat exchanger. The heat exchange circuit and/or associated apparatus may be shared with the work station (in embodiments wherein the work station is actively cooled).

The cooling channels may be in thermal contact with, embedded in or extend through the end effector magnetocaloric body.

The end effector may be adapted to be robotically controlled. For example, the end effector may be connected or connectable to a robotic apparatus such as a robotic arm, whereby the end effector is movable in relation to a composite part.

The apparatus may comprise a robotic apparatus connected to the end effector, for robotically controlling the location of the end effector in relation to a composite part, in use.

In some embodiments, the end effector forms part of a self-propelled apparatus for thermally joining a closed geometry structure.

The welding end effector may comprise an inductive element, in addition to said end effector magnetocaloric body, arrangement for applying and disapplying a magnetic field and cooling arrangement.

The inductive element may comprise an induction coil, such as a Litz coil.

The inductive element may be configured (for example by virtue of its position in relation to the effector magnetocaloric body) to apply and disapply the magnetic field.

The inductive element may be actively cooled, using one or more cooling channels or conduits in thermal contact therewith, for cooling or regulating the temperature of the inductive element and, where present the end effector magnetocaloric body.

In some embodiments, the inductive element comprises a coil wrapped around one or more said cooling channels or conduits.

The end effector may have an operating face, which in use is positioned close to or against a composite article or assembly. The operating face may comprise the magnetocaloric body, or more typically be adjacent to the magnetocaloric body. The end effector may comprise a housing, and the magnetocaloric body may be within and against or in thermal contact with the housing; for example.

In embodiments wherein the end effector is a welding end effector, and comprising an inductive element, magnetocaloric material may be positioned between the inductive element and the operating face. The magnetocaloric body may be positioned between the inductive element and the operating face.

The methods and apparatus disclosed herein may be of particular utility in aerospace, for example to join large or elongate composite articles together, or to join composite articles to form a composite assembly with complex geometry.

The methods any apparatus disclose herein may utilise any suitable magnetocaloric material, or a combination of magnetocaloric materials. For example, the magnetocaloric material may comprise Gadolinium (Gd). The magnetocaloric material may comprise a gadolinium alloy. The magnetocaloric material may comprise a gadolinium-rare earth alloy, such as gadolinium-terbium (Gd-Tb), gadolinium-erbium (Gd-Er), gadolinium-dysprosium (Gf-Dy), and the like. The magnetocaloric material may comprise manganese (Mn). For example, the magnetocaloric material may comprise a manganite, a Mn-Fe-P-Si-based material, a Ni-Mn-In-(Co) Heusler alloy. The magnetocaloric material may comprise a Heusler alloy, for example a low-cost Heusler alloy, a semi-Heusler alloy, a rare-earth-free Heusler alloy, such as Ni-Mn-In-(Co) Heusler alloy. The magnetocaloric material may comprise Ni-Mn-based Heusler alloys, FeRh, La(FeSi)₁₃-based compounds, MnsGaC anti-perovskites, Fe₂P compounds, Gd-Si-Ge.

The magnetocaloric material may be a first-order (FOMT) magnetocaloric material. First-order magnetocaloric materials (FOMT) may undergo discontinuous change in magnetisation with changing temperature. The FOMT may comprise La-Fe-Si-H, La-Fe-Mn-Si-H, La-Fe-Co-Si, La-Fe-Si-X-H, Fe-P, Fe-Rh, Mn-Ga, and/or Mn-Fe-P-Si, La(Fe-Mn-Si)₁₃-Hₓ compounds, and the like. The magnetocaloric material may be a second-order magnetocaloric material (SOMT). Second-order magnetocaloric materials (SOMT) may undergo continuous change in magnetisation with changing temperature. Second order magnetocaloric materials may comprise gadolinium (Ga).

It is to be understood that the various optional features disclosed in relation to each aspect of the invention apply also to each other aspect of the invention. In particular, the aspects of the apparatus disclosed herein may comprise any structural features disclosed in relation the methods of the invention and, conversely, the aspects of the methods disclosed herein may make use of, or be used to form, any features of the apparatus of the invention.

### Description of the Figures

Example embodiments will now be described with reference to the following figures in which:
Figures 1(a)-1(e) schematically illustrates an exemplary method an apparatus for cooling a composite part;
Figures 2(a)-2(h) schematically illustrates an exemplary method an apparatus for cooling a composite part;
Figure 3 is a schematic illustration of an exemplary apparatus for cooling a composite assembly and for inductively welding composite parts;
Figure 4 is a schematic illustration of another exemplary apparatus for cooling a composite article; and
Figure 5 is a schematic illustration of the apparatus of Figure 4, further including a welding end effector adapted to inductively weld and cool a composite part.

### Detailed Description of Example Embodiments

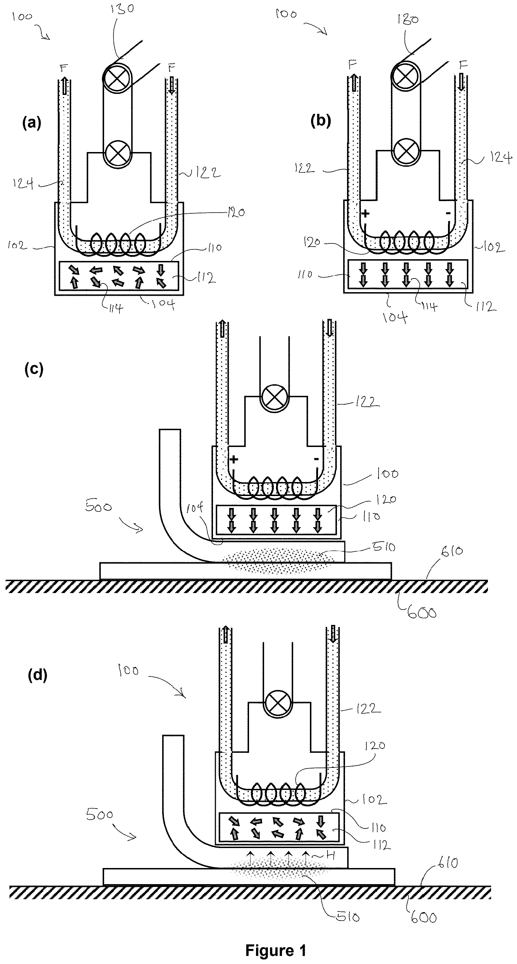

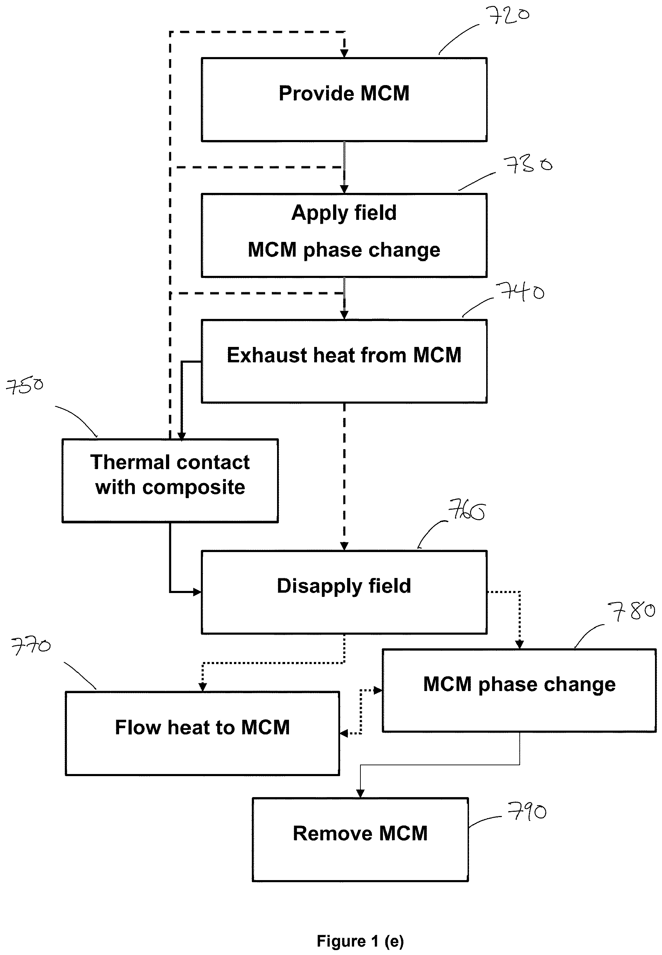

An exemplary method and apparatus is shown in Figures 1(a)-(e). Figure 1(e) is a flow chart illustrating the steps of the method.

A magnetocaloric material (MCM) is provided, in an end effector 100 (step 720). Figure 1(a) shows the end effector 100 adapted to cool a composite part 500 (shown in Figure 1(c)). The end effector 100 comprises housing 102 and contained within the housing is a magnetocaloric body 110, formed from a magnetocaloric material 112. In ambient conditions generally around room temperature, the magnetic domains 114 within the magnetocaloric material 112 are randomly oriented. The magnetocaloric material 112 is in a paramagnetic phase.

The end effector 100 also includes an arrangement for applying a magnetic field to the magnetocaloric material 112, in the form of an electromagnet 120. The electromagnet 120 is in the embodiment shown actively cooled, via a cooling conduit 122 forming part of a heat exchange circuit (not shown) for flowing heat exchange fluid (water 124) through the conduit 122, as illustrated by the arrows F. The cooling conduit 122 is proximal to and therefore also in thermal contact with the magnetocaloric body 110. The end effector 100 is connected to a robotic arm 130, for moving the position of the end effector 100 in relation to a composite part 500 in use (as discussed in further detail below).

A magnetic field is applied to the magnetocaloric material 112 of the body 110 (step 730) by energising the electromagnet 120 (illustrated by "+" and "-" in the Figure 1(b)). Under the influence of the magnetic field, the magnetocaloric material undergoes a magnetic phase change in which the magnetic domains 114 align in a ferromagnetic phase. Heat generated by the magnetic phase change is exhausted from the magnetocaloric material 112 via the circulating heat exchange fluid, water 124 (step 740). During this process, the magnet 120 remains energised, to maintain the magnetocaloric material 112 in the ferromagnetic phase. Typically the temperature of the magnetocaloric material 112 rises during this process (normally from a first, ambient temperature, to a second, elevated temperature above ambient temperature), however the active cooling via the water 124 circulating in the conduit 122 regulates the temperature of the magnetocaloric material 112 and it is maintained as close to the ambient temperature as possible throughout.

When sufficient heat has been exhausted from the magnetocaloric material 112 (normally, when the magnetocaloric material has returned to, or close to the first temperature), the end effector 100 can be used to cool a hot region 510 of the composite part 500. The composite part 500 is shown supported on a work surface 610 of a work station 600.

A region 510 of a composite part 500 can be heated for a variety of reasons during composite manufacture, for example due to a curing process, or a thermal joining process or the like.

Referring now to Figure 1(c), while the magnetocaloric material is in the ferromagnetic phase, the magnetocaloric material is moved into thermal contact with the composite part 500, proximate the region 510. In the embodiment shown, an operating face 104 is placed on the part 500 (step 750). It will be understood that the composite part 500 may in some embodiments be in thermal contact with the magnetocaloric material throughout. The illustrated by dashed lines in Figure 1(e) illustrate alternative optional sequences of step 720. When the magnetic field is disapplied (step 760), by de-energising the electromagnet 120, heat is caused to flow from the region 510 of the composite part 500 (illustrated by arrows H marked in Figure 1(d)). Disapplying the magnetic field together typically with a contribution from the heat H flowing from the composite part 500 (at step 770), induces reversal of the magnetic phase change (step 780), such that the magnetocaloric material 112 of the body 110 reverts to the paramagnetic phase.

The sequence of the initiation and completion steps 770 and 780 can vary, with examples as illustrated by the dotted lines in Figure 1(e).

Typically the temperature of the magnetocaloric material 112 falls during this process (normally from the first, ambient temperature, to a third temperature below ambient temperature), however the active cooling via the water 124 circulating in the conduit 122 regulates the temperature of the magnetocaloric material 112 and it is maintained as close to the ambient temperature as possible throughout.

When the part 500 is sufficiently cooled, the end effector 100 can be withdrawn (step 790).

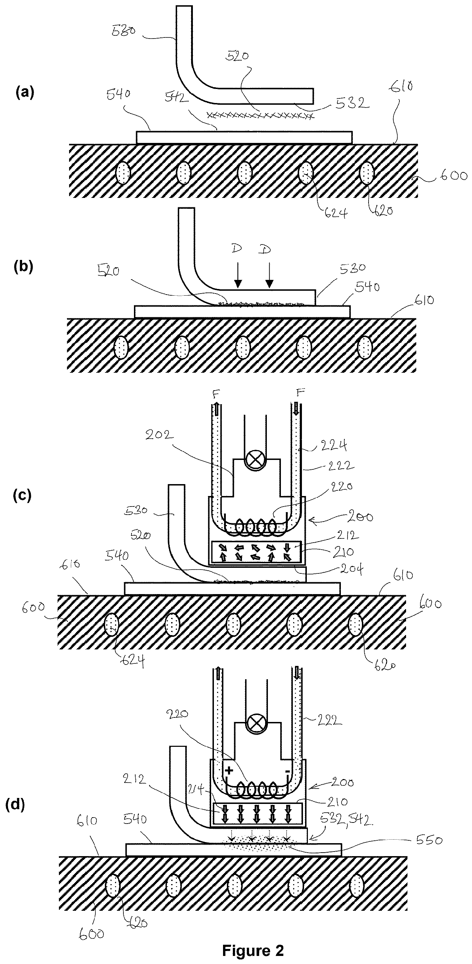

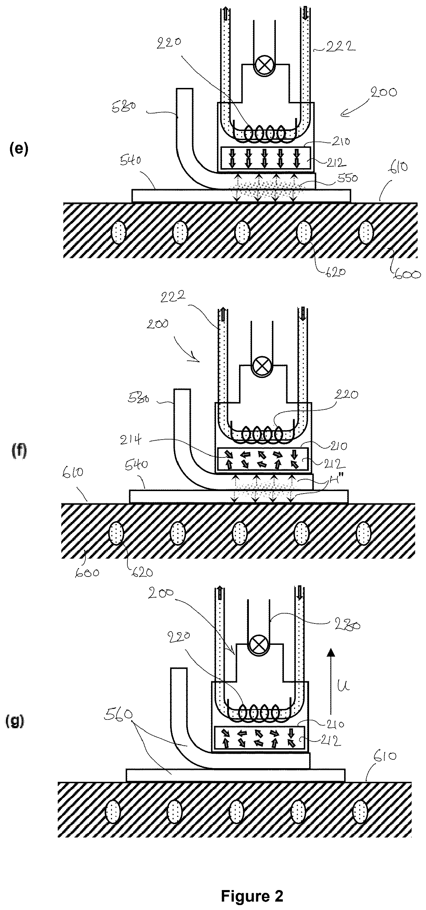

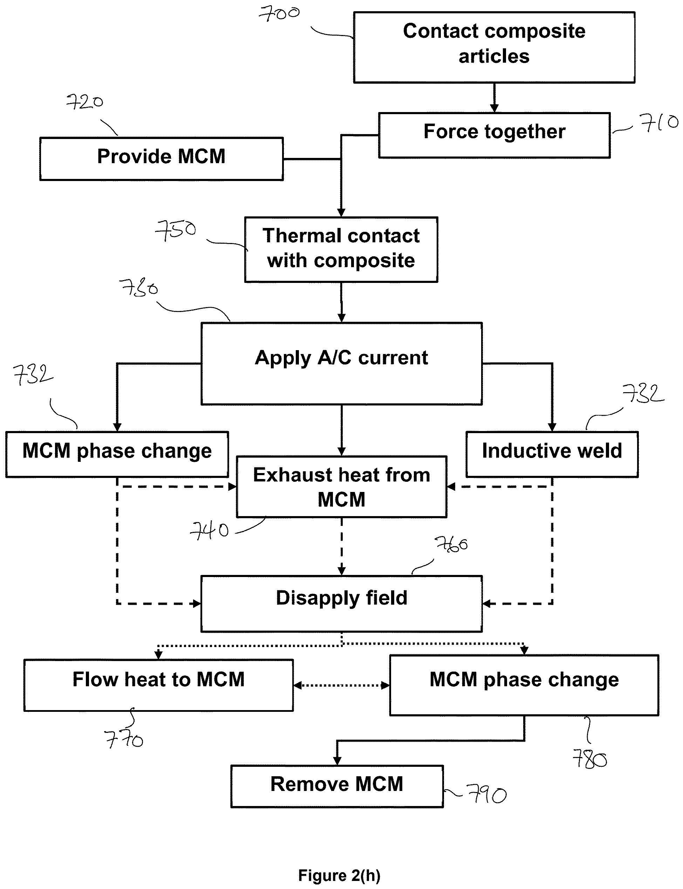

An exemplary embodiment of thermally joining a first composite article 530 to a second composite article 540 is illustrated with reference to Figures 2(a)-(h). Figure 2(h) is a flow chart illustrating the steps of the method, with features in common with the steps described with reference to Figure 1 provided with like reference numerals.

The first composite article 530 (in the embodiment shown a strengthening element for a composite skin) has a first faying surface 532 and the second composite article 540 (a composite skin) has a second faying surface 542 (which is a region of the upper surface of the composite article 540). The first and second composite articles 530, 540 are composed of thermoplastic carbon fibre composite. An optional metallic mesh susceptor 520 is positioned between the composite articles 530, 540.

The second composite article 540 is placed on the work surface 610 of a work station 600. Embedded in the work station are cooling channels 620 and heat exchange fluid 624 is circulated in the channels to regulate the temperature of the work surface 610 and thus the composite article or articles thereon. The work surface 610 can be a tooling surface of a mold, upon which the composite article 540 is made.

The first composite article 530 is placed on the second composite article 540 (see arrow A in Figure 2(a) and step 700 in Figure 2(h)) with the faying surfaces 532 and 542 in contact with one another. A force D is applied therebetween (step 710), for example by weighing the first composite article 530 down, or applying a mechanical pressure with suitable apparatus, or the like. The force D is applied throughout the subsequent steps illustrated in Figures 2(c)-(e).

A magnetocaloric material (MCM) is provided, in a welding end effector 200 (step 720). Referring now to Figures 2(c) a welding end effector 200 includes an inductive element, induction coil 220 which is actively cooled by heat exchange fluid 224 flowing (F) through cooling conduit 222, around which the induction coil 220 is wound. A magnetocaloric body 210, formed of magnetocaloric material 212 is positioned with a housing 202, between an operating face 204 of the welding end effector and the induction coil 220. The induction coil 220, cooling conduit 222, the magnetocaloric body 210 and the operating face 204 are in thermal contact with one another. The operating face 204 is placed in thermal contact with the composite article 540 (step 750).

The active cooling conduit 222 of the welding end effector 200 and the conduits 620 of the work station 600 may utilise the same heat exchange apparatus, such as a pump, heat exchanger and heat exchange fluid reservoir (not shown), or may be connected to a common source of heat exchange fluid, such as a mains water supply.

When the induction coil is energised (Figure 2(d), and step 730, Figure 2(h)), by applying A/C current through the coil (+, -), a variable magnetic field is generated, inducing eddy currents and concomitant joule heating of the susceptor 520 (omitted from Figure 2(d) for clarity) and in the conductive carbon fibre reinforcement material of the composite parts 530, 540 in the region 550 of the adjacent faying surfaces 532, 542. Thus, the meltable thermoplastic matrix material of the faying surfaces 532, 542 are heated above the melting point of the thermoplastic material, fusing the faying surfaces together (step 732).

The magnetocaloric body 210 is also positioned within the magnetic field generated by the induction coil 220, and the applied magnetic field also induces a magnetic phase change, aligning the magnetic domains 214 of the magnetocaloric material 212 in a ferromagnetic phase, with the varying magnetic field generated by the induction coil 220 (also in step 732). As described above with reference to Figure 1, the active cooling regulates the temperature of both the induction coil 220 and the magnetocaloric body, such that heat is exhausted from the magnetocaloric body 210 while the induction coil 220 is energised (step 740).

Turning now to Figure 2(e), when the A/C current through the induction coil 220 is ceased (step 760), the magnetic field is removed from the magnetocaloric material 212 of the body 210. Heat H" then flows from the region 550 into both the work station 600 and the magnetocaloric body 210 of the welding end effector 200 (step 770), and the magnetocaloric material 212 undergoes a reverse of the magnetic phase change to revert to a paramagnetic phase with the magnetic domains 214 in a randomised orientation (step 780), as illustrated in Figure 2(f). As described above with reference to Figure 1, during the steps 730, 732 of inductively heating the parts 530, 540, the magnetocaloric material 212 may increase in temperature, and once the magnetic field has been disapplied, the magnetocaloric material may at least initially drop in temperature.

Once the region 550 of the resulting composite assembly 560 has cooled to below a threshold temperature (typically a temperature below the thermoplastic melting point), the end effector 200 can be removed (step 790), robotically in the direction U, using the arm 230.

As illustrated by comparing the example embodiments of Figures 1(e) and 2(f), it will again be understood that the sequence of the initiation and completion of the steps of the method should not be construed as being limited by the numerical values of the labels appended to the various steps described in the example embodiments and shown in the figures.

In a production line setting, the process may be repeated multiple times, or in multiple locations across a composite part. For example, multiple first composite articles may be applied to a first composite articles (e.g. multiple stringers reinforcing a composite skin), or in multiple stages along a single stringer.

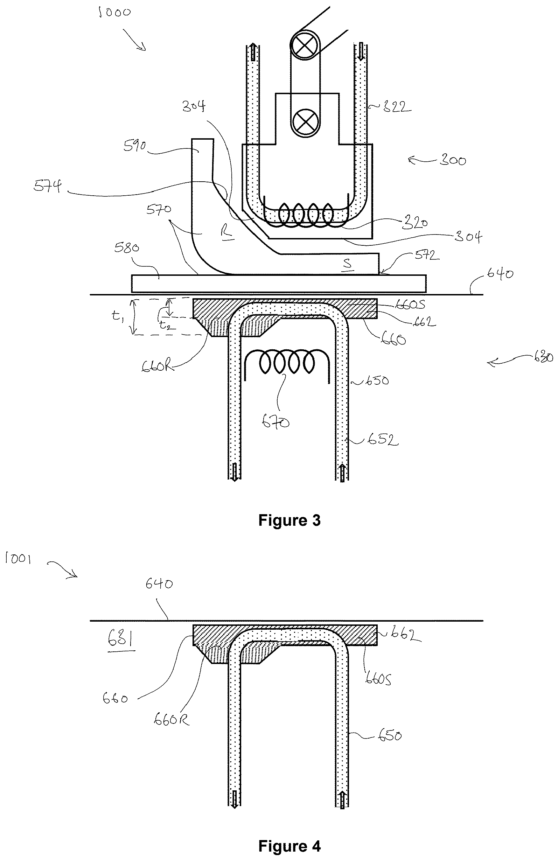

Figure 3 shows another apparatus 1000 for cooling a composite part 501.

The apparatus 1000 further includes a welding end effector 300 having an induction coil 320 actively cooled by a cooling conduit 322 around which the coil 320 is wound, as hereinbefore described.

The apparatus further includes a work station 630, with a work surface 640, supporting a composite assembly 570. The work surface 640 is actively cooled via heat exchange fluid 652 flowing through cooling conduit 650. The work station 630 additionally includes a shaped magnetocaloric body 660 formed of magnetocaloric material.

The composite assembly 570 has a thickness that varies across the width of a join 574 between constituent composite articles 580, 590, by virtue of a region R of increased thickness, which is thicker than adjacent region S.

The magnetocaloric body 660 has a thickness t₁ in a region 660R that is thicker than a thickness t₂ in a region 660S. The regions 660S and 660R are positioned adjacent areas of the work surface 640 that are adjacent regions R and S of a suitably positioned composite assembly 570.

The magnetocaloric body 660 and work surface 640 are actively cooled by heat exchange fluid 652 circulated through a cooling conduit 650 that extends through the magnetocaloric body 660, and which is in thermal contact with both the magnetocaloric body 660 and the surface 640. The work station further comprises an electromagnet 670, positioned to apply and disapply a magnetic field to the magnetocaloric material of the body.

The welding end effector 300 has an operating face 304 shaped to accommodate the geometry of the assembly 570, and in particular the profile of the upper surface 574, to facilitate close positioning of the induction coil, for inductively welding the composite articles 580, 590 generally as disclosed above in relation to other example embodiments.

The magnet 670 of the work station 630 can be energised to induce a magnetic phase change in the magnetocaloric material 662 of the body 660 and then de-energised to disapply the magnetic field and allow the phase change to be reversed, whereby heat can be flowed from the composite assembly to the magnetocaloric material 662.

By virtue of the increased thickness of the region R in relation to the region S, the composite assembly 570 would not otherwise cool evenly across the width of the join 572. However, by selectively providing an increased thickness and volume of the magnetocaloric material in the region 660R, compared to the region 660S, an increased heat flow from the region R of the composite assembly 570 to the region 660R of the magnetocaloric body 660 is selectively increased in comparison to heat flow from the region S to the region 660S.

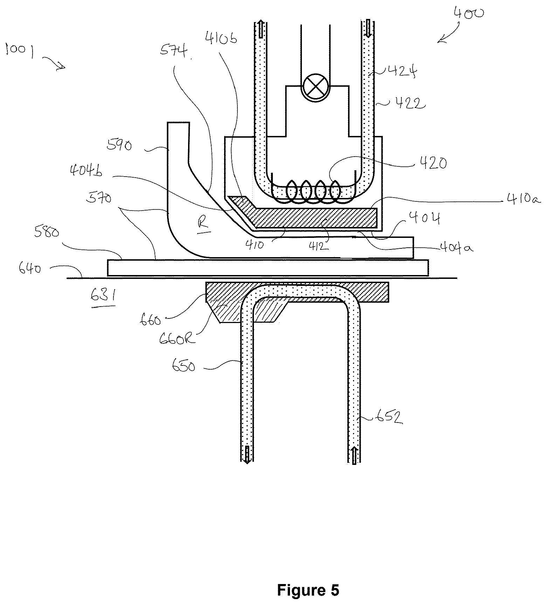

A further apparatus 1001 for cooling a composite part is shown in Figure 4. Features in common with the apparatus 1000 are provided with like reference numerals. The apparatus 1001 includes a work station 631 identical to the work station 630, but lacks an electromagnet. In use, the magnetocaloric material 662 of the body 660 can be induced to undergo a phase change by way of a magnetic field applied by an end effector, as shown for example in Figure 5. The apparatus 1001 additionally includes a welding end effector 400, with an actively cooled induction coil 420 wound around a cooling conduit 422.

In common with the end effector 300, the end effector 400 has an operating face 404 configured to conform with the upper surface 574 of the composite assembly 570, with a bevelled region 404a and a level region (in the orientation shown in the figure) 404b.

The end effector 400 has a magnetocaloric body 410 formed of magnetocaloric material 412. The magnetocaloric body 410 is shaped correspondingly to the operating face 404 to reflect the geometry of the surface 572 of the composite assembly 570, having a bevelled region 410b adjacent to the bevelled region 404b of the operating face 404, and a level region 410a adjacent to the level region 404a of the operating face 404.

In use of the apparatus 1001, the welding end effector 400 is positioned against the surface 574 and the induction coil 420 energised to inductively weld the articles 580, 590 together generally as described above. The variable magnetic field generated by the induction coil 420 is applied to both of the magnetocaloric bodies 410, 660, inducing magnetic phase changes of the magnetocaloric material 412, 662. Heat exchange fluid 652, 424 is circulated in the conduits 420, 650 to regulate the temperature of the magnetocaloric material 412, 662 and heat is exhausted therefrom while the magnetic field is applied. When the AC current to the induction coil 420 is ceased, heat from the inductive welding process flows from the composite article 570 to the magnetocaloric material 412, 662, thereby cooling the composite assembly 570. Heat flow from the thicker region R of the composite assembly to the region 660R of the magnetocaloric body 660 is selectively increased by virtue of the shape and configuration of the body 660, as discussed above. In alternative embodiments, the magnetocaloric body present in an end effector can be shaped so as to provide selective cooling in an analogous manner. For example, a region 410b in alternative embodiments may be thicker than a region 410a, to selective increase heat flow to the region 410b.

It will be understood that the foregoing non-limiting embodiments are examples of the invention and that any of the end effectors or work stations disclosed herein may be used in combination.

## Claims

1. A method of cooling a composite part, comprising:
providing a magnetocaloric material;
applying a magnetic field to the magnetocaloric material to induce a magnetic phase change of the magnetocaloric material;
exhausting heat from the magnetocaloric material while the magnetic field is applied;
disapplying the magnetic field from the magnetocaloric material; and flowing heat from the composite part to the magnetocaloric material; to at least partially reverse the magnetic phase change and to cool the composite part.

2. The method of claim 1, comprising applying the magnetic field to the magnetocaloric material and thereby increasing the temperature of the magnetocaloric material, from a first temperature to a higher second temperature; and/or comprising exhausting heat from the magnetocaloric material and thereby maintaining the magnetocaloric material at or near the first temperature or returning the magnetocaloric material from the second temperature to the at or near the first temperature.

3. The method of claim 1 or 2, comprising disapplying the magnetic field from the magnetocaloric material and thereby decreasing the temperature of the magnetocaloric material, from at or near the first temperature to a third temperature below the first temperature; and/or comprising flowing heat from the composite part to the magnetocaloric material may maintain the magnetocaloric material at or near the first temperature or to return the magnetocaloric material from a temperature below the first temperature to at or near the first temperature.

4. The method of any preceding claim, wherein the method is a method of thermally joining a first faying surface of a first composite article to a second faying surface of a second composite article, wherein one or both of the faying surfaces comprises a meltable or softenable material; wherein meltable or softenable material optionally comprises a thermoplastic material and further optionally the thermoplastic material is the matrix material of the first and/or second composite article;
and the method comprises:
contacting the first and second faying surfaces to define a contact area therebetween;
heating the faying surfaces to raise the temperature of the meltable or softenable material and weld together at least a portion of the faying surfaces to form a composite assembly;
providing a magnetocaloric material;
applying a magnetic field to the magnetocaloric material to induce a magnetic phase change of the magnetocaloric material;
exhausting heat from the magnetocaloric material while the magnetic field is applied;
disapplying the magnetic field from the magnetocaloric material; and flowing heat from the composite assembly to the magnetocaloric material, to at least partially reverse the magnetic phase change and to cool the composite assembly.

5. The method of claim 4, wherein heating the faying surface comprises inductively heating the faying surfaces, by applying an alternating current to an inductive element and inductively heating the faying surfaces using the inductive element.

6. The method of claim 5, comprising using the inductive element to both heat the faying surfaces and to apply the magnetic field to the magnetocaloric material;
optionally wherein heating the faying surfaces comprises positioning a welding end effector proximate the faying surfaces, wherein the welding end effector comprises the inductive element; and
further optionally wherein at least some of the magnetocaloric material is provided in the welding end effector, proximal to the inductive element; and/or wherein at least some of the magnetocaloric material is provided proximate to a tooling surface or a work station supporting the composite part.

7. The method of any preceding claim, wherein exhausting heat from the magnetocaloric material while the magnetic field is applied comprises actively cooling the magnetocaloric material by circulating of heat exchange fluid through cooling channels proximal to the magnetocaloric material, to remove heat therefrom.

8. An apparatus for use in cooling a composite part; the apparatus comprising an end effector, the end effector comprising:
a magnetocaloric body comprising a magnetocaloric material;
an arrangement for applying and disapplying a magnetic field to the magnetocaloric material; and
a cooling arrangement for exhausting heat from the magnetocaloric material.

9. The apparatus of claim 8, comprising an active cooling arrangement, having one or more cooling channels or conduits forming part of a heat exchange circuit, wherein the cooling channels or conduits are in thermal contact with, embedded in or extend through the magnetocaloric body.

10. The apparatus of claim 8 or 9, wherein the end effector is a welding end effector, and further comprises an inductive element, wherein the inductive element is configured to both apply and disapply the magnetic field and to inductively heat a composite part; wherein the magnetocaloric body is optionally positioned between the inductive element and the operating face.

11. The apparatus of claim 10, when dependent on claim 9, wherein the inductive element is actively cooled by said cooling channels or conduits; the inductive element optionally comprising a coil wrapped around one or more said cooling channels or conduits.

12. The apparatus of any one of claims 8 to 11, comprising a work station having a work surface, for supporting the composite part, wherein;
the work station optionally comprises a work station cooling arrangement, wherein the work station cooling arrangement comprises an active cooling arrangement, comprising one or more cooling channels or conduits; and
further optionally wherein the work station comprises one or more work station magnetocaloric bodies, the or each work station magnetocaloric body being positioned in thermal contact with the work surface, wherein the work station cooling arrangement is in thermal contact with the or each work station magnetocaloric body, to cool or regulate the temperature of the or each work station magnetocaloric body.

13. An apparatus for use in cooling a composite part; the apparatus comprising:
a work station having a work surface for supporting a composite part:
at least one magnetocaloric body comprising a magnetocaloric material, in thermal contact with at least a region of the work surface;
an arrangement for applying and disapplying a magnetic field to the magnetocaloric material; and
a cooling arrangement for exhausting heat from the magnetocaloric material.

14. The apparatus of claim 13, wherein the work station comprises an active cooling arrangement, comprising one or more cooling channels or conduits forming part of a heat exchange circuit.

15. The apparatus of claim 13 or 14, wherein the or each magnetocaloric body is embedded into the work surface, or positioned against an opposite surface of a sheet forming the work surface; and/or
wherein the work station comprises an electromagnet, positioned and configured to apply an disapply the magnetic field to the magnetocaloric material of the or each magnetocaloric body.
